# EUROPÄISCHE PATENTSCHRIFT

(11) **EP 0 622 272 B1**
(45) Veröffentlichungstag und Bekanntmachung des Hinweises auf die Patenterteilung: **28.08.1996**
(21) Anmeldenummer: 94105310.0
(22) Anmeldetag: 06.04.1994
(51) Int. Cl.: B60R 7/05, B60J 3/02

(54) **Sonnenblende für Fahrzeuge**
Sun visor for vehicles
Pare-soleil pour véhicules

(30) Priorität: 24.04.1993 DE 4313525
(43) Veröffentlichungstag der Anmeldung: 02.11.1994
(73) Patentinhaber: GEBR. HAPPICH GmbH, D-42285 Wuppertal (DE)
(72) Erfinder: Vaxelaire, Francis, F-70200 Lure (FR)

(56) Entgegenhaltungen:
- EP-A- 0 138 387
- EP-A- 0 425 896
- DE-A- 3 727 455
- FR-A- 1 327 267
- US-A- 4 275 916

## Beschreibung

Die Erfindung bezieht sich auf eine Sonnenblende für Fahrzeuge mit einem Sonnenblendenkörper, der sowohl mit einem Schminkspiegel als auch mit einem Ablagefach ausgerüstet ist.

Eine durch die US-A-4 275 916 bekanntgewordene Sonnenblende dieser Art weist einen Sonnenblendenkörper mit in einer Vertiefung desselben befestigten Einbaueinheit auf, die aus einem Ablagefach, einem dieses bereichsweise abdeckenden Spiegel und einer Abdeckklappe zum Verschließen der Fachöffnung besteht.

Der vorliegenden Erfindung liegt die Aufgabe zugrunde, eine Sonnenblende der eingangs genannten Art benutzerfreundlicher zu gestalten.

Demgemäß ist Gegenstand der Erfindung eine Sonnenblende für Fahrzeuge mit einem Sonnenblendenkörper, der an seiner einen Breitseite eine erste Ausnehmung zur gegenüber der Außenfläche des Sonnenblendenkörpers versenkten Aufnahme eines Schminkspiegels und an seiner anderen Breitseite eine zweite Ausnehmung zur gegenüber der Außenfläche des Sonnenblendenkörpers versenkten Aufnahme eines Ablagefachs für kleinere Gebrauchsgegenstände, Dokumente und dgl. aufweist, wobei das Ablagefach mit einem Boden und hierzu senkrecht stehenden Wänden ausgebildet und längs einer Randkante schwenkbeweglich an einem in der zweiten Ausnehmung sitzenden Rahmen gelagert ist.

Durch die erfindungsgemäße Ausbildung der Sonnenblende sind Schminkspiegel einerseits und Ablagefach andererseits räumlich voneinander getrennt und daher individuell gestaltbar und unabhängig voneinander benutzbar. Der Schminkspiegel braucht nicht verkürzt zu werden, um auf diese Weise das Ablagefach zugänglich zu machen. Vielmehr kann der Sonnenblendenkörper mit einem relativ großen Schminkspiegel bestückt werden, was Benutzerwünschen sehr entgegen kommt.

Von besonderem Vorteil ist es, daß der Schminkspiegel ohne Einschränkung benutzerzugänglich ist, wenn sich der Sonnenblendenkörper in der heruntergeklappten Lage vor der Windschutzscheibe, also in seiner Gebrauchsstellung befindet. Auch ist es von besonderem Vorteil, daß das Ablagefach an der Breitseite des Sonnenblendenkörpers angeordnet ist, die dem Benutzer in der Nichtgebrauchslage des Sonnenblendenkörpers unter dem Fahrzeughimmel zugänglich ist. Der Benutzer muß also nicht erst den Sonnenblendenkörper aus der Nichtgebrauchslage in die Gebrauchslage herunterklappen, um kleine Gebrauchsgegenstände, Dokumente und dgl. im Ablagefach ablegen zu können.

Zur einfachen Herstellung der Sonnenblende und zur leichten Montage des Schminkspiegels und des Ablagefachs trägt bei, daß in Ausgestaltung der Erfindung die Ausnehmungen an den Breitseiten des Sonnenblendenkörpers durch eine diesen durchsetzende Öffnung gebildet sind. Damit können Schminkspiegel und Ablagefach, obwohl räumlich getrennt, dennoch unmittelbar aneinander angeordnet werden, so daß sich die Erfindung auch bei relativ dünnen Sonnenblendenkörpern problemlos realisieren läßt.

Bevorzugterweise ist in die Öffnung des Sonnenblendenkörpers von der einen Seite her ein den Schminkspiegel haltender Rahmen und von der anderen Seite ein, das Ablagefach lagernder Rahmen eingesetzt, wobei die Rahmen über Verbindungselemente aneinander festlegbar sind.

Mit besonderem Vorteil kann weiterhin vorgesehen sein, daß das Ablagefach durch eine Verriegelungsmechanik in der geschlossenen Nichtgebrauchslage gehalten und über eine Entriegelungstaste (Pushtaste) öffenbar ist.

Auch kann am Spiegelrahmen ein Klappdeckel zum Abdecken des Schminkspiegels bei Nichtgebrauch gelagert sein.

Ein Ausführungsbeispiel der Erfindung wird im folgenden anhand der Zeichnungen näher erläutert, und es zeigen:
- Fig. 1: den Sonnenblendenkörper einer Fahrzeugsonnenblende in der Gebrauchslage,
- Fig. 2: den Sonnenblendenkörper in der Nichtgebrauchslage,
- Fig. 3: den Sonnenblendenkörper mit Spiegeleinbaugruppe vor der Montage und
- Fig. 4: den Sonnenblendenkörper mit Ablagefacheinbaugruppe vor der Montage.

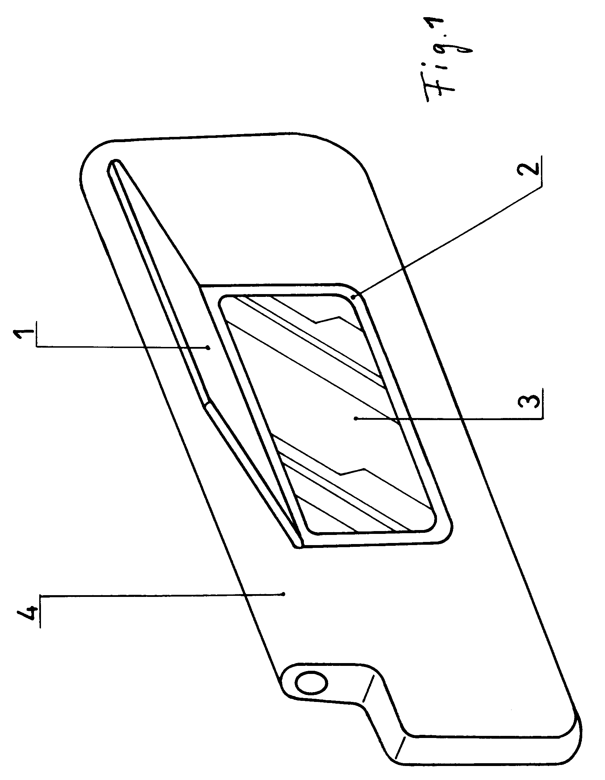

In Fig. 1 ist ein Sonnenblendenkörper 4 ohne Sonnenblendenachse, Lagerböckchen, Gegenlagerachse und Gegenlagerböckchen dargestellt, und zwar in einer etwa senkrecht ausgerichteten Gebrauchslage vor einer nichtgezeigten Windschutzscheibe. In dieser Gebrauchslage des Sonnenblendenkörpers 4 ist nach dem Öffnen eines Klappdeckels 1 ein von einem Rahmen 2 getragener Schminkspiegel 3 einsehbar.

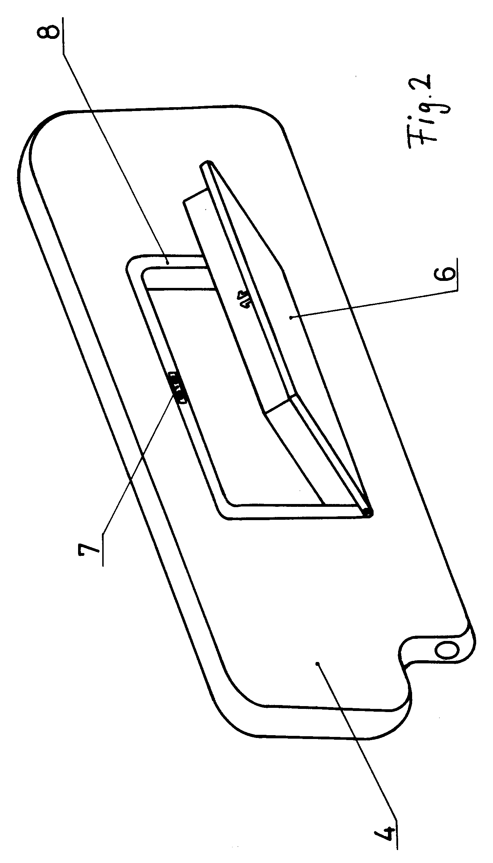

Der Sonnenblendenkörper 4 nach Fig. 1 ist auch in Fig. 2 gezeigt, jedoch hier in seiner Nichtgebrauchslage, in der er in etwa horizontaler Ausrichtung an einem nichtgezeigten Dachhimmel anliegt. In dieser Nichtgebrauchslage des Sonnenblendenkörpers ist ein Ablagefach 6 nach dem Lösen einer Verriegelungsmechanik 7 öffenbar und zugänglich. Das Ablagefach 6 ist mit einer Randkante an einem Rahmen 8 schwenkbeweglich gelagert.

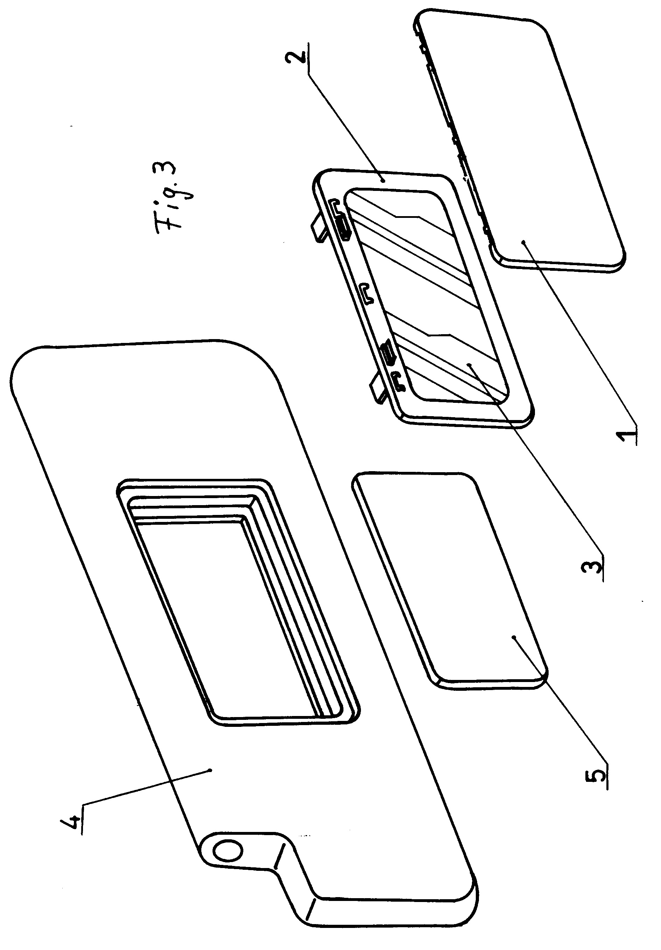

Fig. 3 zeigt in schaubildlicher Explosivdarstellung den Sonnenblendenkörper sowie die Spiegelbaugruppe mit dem Klappdeckel 1, dem Rahmen 2 und dem Schminkspiegel 3. Zur Spiegelbaugruppe kann auch eine den Schminkspiegel 3 rückseitig abstützende Platte 5 gehören.

Der Sonnenblendenkörper 4 weist eine rechteckige Durchgangsöffnung mit stufenförmig abgesetzten Falzen auf. In diese Durchgangsöffnung wird die Spiegelbaugruppe von der einen Breitseite des Sonnenblendenkörper 4 eingesetzt. Aus Fig. 3 ist noch ersichtlich, daß am Rahmen 2 senkrecht zur Rahmenebene nach hinten wegstrebende Verbindungselemente sitzen.

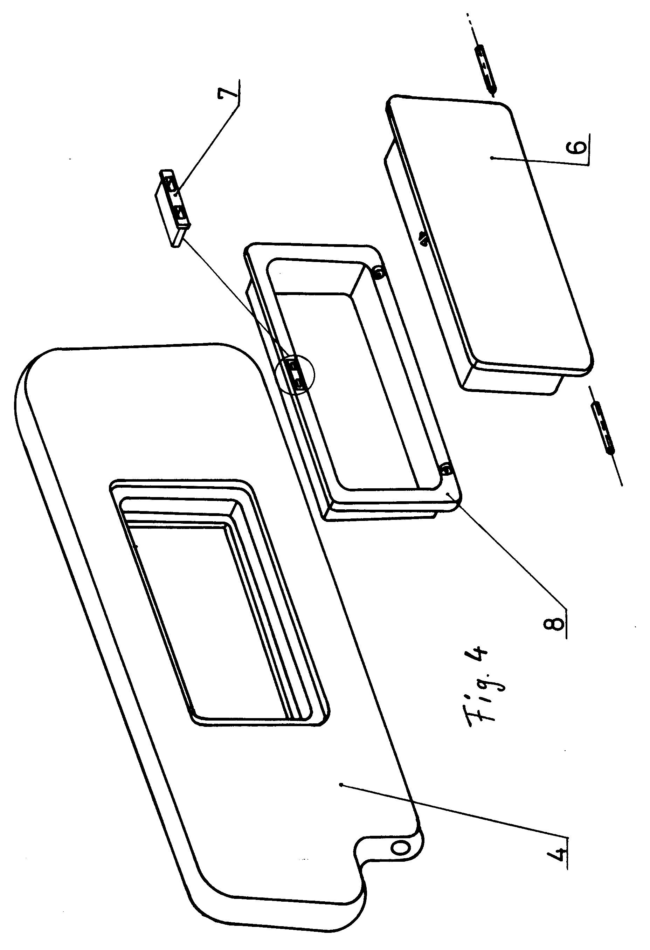

In Fig. 4 ist in ebenfalls schaubildlicher Explosivdarstellung der Sonnenblendenkörper 4 mit der Ablagefachbaugruppe gezeigt. Es ist ersichtlich, daß am Rahmen 8 die Verriegelungsmechanik 7, die mit einem daran lösbar aufgenommenen Verriegelungszapfen am Ablagefach zusammenwirkt, angeordnet ist. Es ist ferner ersichtlich, daß am unteren Längsrand des Rahmens 8 Scharnieraugen zum Anlenken des Ablagefachs 6 mittels der gezeigten Scharnierstifte angeordnet sind.

Die Spiegelbaueinheit wird also von der einen und die Ablagefachbaueinheit von der anderen Seite des Sonnenblendenkörpers 4 in dessen Durchgangsöffnung durch einfache Steckmontage eingesetzt. Die Anlenkung des Klappdeckels 1 an den Rahmen 2 kann wie in den Unterlagen der deutschen Patentanmeldung DE-A-39 36 350.3 beschrieben erfolgen. Die Einzelteilte der Sonnenblende können überwiegend als Kunststoff-Spritzgußteile ausgebildet sein. Der Sonnenblendenkörper 4 sollte aus gegebenenfalls mit einer Einlage ausgesteiftem Schaumkunststoff bestehen.

Es versteht sich, daß sich die Erfidung auch bei einer Sonnenblende realisieren läßt, die eine Beleuchtungseinrichtung aufweist, die es erlaubt, den Spiegel auch bei Dunkelheit benutzen zu können.

## Patentansprüche

1. Sonnenblende für Fahrzeuge mit einem Sonnenblendenkörper (4), der an seiner einen Breitseite eine erste Ausnehmung zur gegenüber der Außenfläche des Sonnenblendenkörpers (4) versenkten Aufnahme eines Schminkspiegels (3) und an seiner anderen Breitseite eine zweite Ausnehmung zur gegenüber der Außenfläche des Sonnenblendenkörpers versenkten Aufnahme eines Ablagefachs (6) für kleinere Gebrauchsgegenstände, Dokumente und dgl. aufweist, wobei das Ablagefach (6) mit einem Boden und hierzu senkrecht stehenden Wänden ausgebildet und längs einer Randkante schwenkbeweglich an einem in der zweiten Ausnehmung sitzenden Rahmen (8) gelagert ist.

2. Sonnenblende nach Anspruch 1, dadurch gekennzeichnet, daß der Schminkspiegel (3) an der Breitseite des Sonnenblendenkörpers (4) angeordnet ist, die dem Benutzer in der Gebrauchslage des Sonnenblendenkörpers (4) vor der Windschutzscheibe zugänglich ist.

3. Sonnenblende nach Anspruch 1 oder 2, dadurch gekennzeichnet, daß das Ablagefach (6) an der Breitseite des Sonnenblendenkörpers (4) angeordnet ist, die dem Benutzer in der Nichtgebrauchslage des Sonnenblendenkörpers (4) unter dem Fahrzeughimmel zugänglich ist.

4. Sonnenblende nach wenigstens einem der Ansprüche 1 bis 3, dadurch gekennzeichnet, daß die Ausnehmungen an den Breitseiten des Sonnenblendenkörpers (4) durch eine diesen durchsetzende Öffnung gebildet sind.

5. Sonnenblende nach wenigstens einem der Ansprüche 1 bis 4, dadurch gekennzeichnet, daß in die Öffnung von der einen Seite her ein den Schminkspiegel (3) haltender Rahmen (2) und von der anderen Seite her ein das Ablagefach (6) lagernder Rahmen (8) eingesetzt ist und daß die Rahmen (2 und 8) über Verbindungslemente aneinander festgelegt sind.

6. Sonnenblende nach wenigstens einem der Ansprüche 1 bis 5, dadurch gekennzeichnet, daß das Ablagefach (6) durch eine Verriegelungsmechanik (7) in der geschlossenen Nichtgebrauchslage gehalten und über eine Entriegelungstaste (Pushtaste) öffenbar ist.

7. Sonnenblende nach wenigstens einem der Ansprüche 1 bis 6, dadurch gekennzeichnet, daß am Spiegelrahmen (2) ein Klappdeckel (1) zum Abdecken des Schminkspiegels (3) bei Nichtgebrauch gelagert ist.

## Claims

1. Sun visor for vehicles, having a sun visor body (4) which has, on its one long side, a first recess for the recessed accommodation, relative to the outer surface of the sun visor body (4), of a make-up mirror (3), and, on its other long side, a second recess for the recessed accommodation, relative to the outer surface of the sun visor body, of a storage compartment (6) for relatively small items of practical use, documents and the like, the storage compartment (6) being designed with a base and walls which are perpendicular thereto, and being mounted pivotably along a peripheral edge on a frame (8) seated in the second recess.

2. Sun visor according to Claim 1, characterized in that the make-up mirror (3) is arranged on that long side of the sun visor body (4) to which the user has access in the in-use position of the sun visor body (4) in front of the windscreen.

3. Sun visor according to Claim 1 or 2, characterized in that the storage compartment (6) is arranged on that long side of the sun visor body (4) to which the user has access in the not-in-use position of the sun visor body (4) under the vehicle roof lining.

4. Sun visor according to at least one of Claims 1 to 3, characterized in that the recesses on the long sides of the sun visor body (4) are formed by an opening passing through said body.

5. Sun visor according to at least one of Claims 1 to 4, characterized in that a frame (2) holding the make-up mirror (3) is inserted from one side into the opening and a frame (8) supporting the storage compartment (6) is inserted from the other side, and in that the frames (2 and 8) are fastened to one another via connecting elements.

6. Sun visor according to at least one of Claims 1 to 5, characterized in that the storage compartment (6) is held in the closed not-in-use position by means of a locking mechanism (7) and can be opened via a release button (push button).

7. Sun visor according to at least one of Claims 1 to 6, characterized in that a hinged cover (1) for covering the make-up mirror (3) when not in use, is mounted on the mirror frame (2).

## Revendications

1. Pare-soleil pour véhicules, comportant un corps (4) qui présente, sur une face large, un premier évidement destiné à recevoir de façon escamotée par rapport à la surface extérieure du corps de pare-soleil (4), un miroir de courtoisie (3) et, sur son autre face large, un deuxième évidement destiné à recevoir de façon escamotée par rapport à la surface extérieure du corps de pare-soleil, un compartiment de rangement (6) destiné à de petits objets utilitaires, papiers et analogues, le compartiment de rangement (6) étant réalisé avec un fond et des parois perpendiculaires à celui-ci et étant monté de façon à pouvoir pivoter, le long d'un bord, sur un cadre (8) monté dans le deuxième évidement.

2. Pare-soleil selon la revendication 1, caractérisé en ce que le miroir de courtoisie (3) est disposé sur la face large du corps de pare-soleil (4) qui est accessible à l'utilisateur lorsque le corps de pare-soleil se trouve en position d'utilisation, devant le pare-brise.

3. Pare-soleil selon la revendication 1 ou 2, caractérisé en ce que le compartiment de rangement (6) est disposé sur la face large du corps de pare-soleil (4) qui est accessible à l'utilisateur lorsque le corps de pare-soleil (4) est en position de non utilisation, sous le plafond du véhicule.

4. Pare-soleil selon au moins l'une des revendications 1 à 3, caractérisé en ce que les évidements ménagés sur les faces larges du corps de pare-soleil (4) sont constitués par une ouverture traversant celui-ci.

5. Pare-soleil selon au moins l'une des revendications 3 à 4, caractérisé en ce que dans l'ouverture, un cadre (2) maintenant le miroir de courtoisie est inséré dans l'ouverture depuis un côté, et un cadre (8) servant au tourillonnement du compartiment de rangement (6) depuis l'autre côté et en ce que les cadres (2 et 8) sont fixés l'un à l'autre par l'intermédiaire d'éléments de liaison.

6. Pare-soleil selon au moins l'une des revendications 1 à 5, caractérisé en ce que le compartiment de rangement (6) est maintenu en position fermée de non utilisation, au moyen d'un mécanisme de verrouillage (7) et peut être ouvert au moyen d'une touche de déverrouillage (bouton-poussoir).

7. Pare-soleil selon au moins l'une des revendications 1 à 6, caractérisé en ce qu'un couvercle rabattable (1) destiné à recouvrir le miroir de courtoisie (3) lorsqu'il se trouve en position de non utilisation est monté à rotation sur le cadre de miroir (2).
